# EUROPEAN PATENT SPECIFICATION

(11) **EP 2 303 573 B1**
(45) Date of publication and mention of the grant of the patent: **26.09.2012**
(21) Application number: 08805039.8
(22) Date of filing: 03.10.2008
(51) Int. Cl.: B32B 17/10, H05B 3/84, H01R 4/02

(54) **LMP BUS BAR AND PANEL OF LAMINATED GLASS**
LMP-SAMMELSCHIENE UND PLATTE AUS LAMINIERTEM GLAS
BARRE OMNIBUS EN MÉTAL LÉGER ET PANNEAU DE VERRE STRATIFIÉ

(30) Priority: 17.06.2008 WO PCT/EP2008/057623
(43) Date of publication of application: 06.04.2011
(73) Proprietor: AGC Glass Europe, 1170 Bruxelles (Watermael-Boitsfort) (BE)
(72) Inventor: SAHYOUN, Xavier, B-6040 Jumet (BE)
(74) Representative: Verbrugge, Vivien François Emeric
(86) International application number: PCT/EP2008/063280
(87) International publication number: WO 2009/152871

(56) References cited:
- EP-A- 0 385 791
- EP-A- 0 719 075
- EP-A- 1 840 449

## Description

### Domain of the invention

The invention relates to bus bar structures as well as laminated glass products requiring a bus bar, e.g. a panel of laminated glass, with a first glass substrate, a conductive layer, wherein the conductive layer is provided on the first glass substrate, and a second glass substrate, wherein the two glass substrates are laminated together via a plastics interlayer, wherein the plastics interlayer is provided on the conductive layer.

### Technical background

Laminated glass is known in the form of safety glass that holds together when shuttered. In the event of breaking, it is held in place by the plastics interlayer, typically of polyvinylbutyral (PVB), between its two or more layers of glass substrate. The plastics interlayer keeps the layers of glass substrate bonded even when broken, and its high strength prevents the glass substrates from breaking-up into large sharp pieces.

Methods for manufacturing laminated glass are well-known in the window industry since decades. A so-called sandwich of the first glass substrate, the plastics interlayer and the second glass substrate is laminated in an automated laminating line by using the procedure of calendaring and autoclaving. Calendaring means the pre-gluing of the sandwich under the action of a pressure imposed by two rolls applied on either side of the glass substrates and the action of heat. The final gluing of the glass substrates by a vacuum/heating cycle, which combines pressure and temperatures, takes place during the step of autoclaving, which completely removes air bubbles in the plastics interlayer between the glass substrates. The result is a clear glass laminate well known from car windscreens.

In the automotive, aviation and other industries, laminated glass panels with integrated electronic components, such as light emitting diodes (LED), are known, e. g. for displaying information or for lighting purposes. For these application areas, the manufacturing of a laminated glass panel with electronic components typically comprises the steps of depositing a conductive layer on the first layer of glass substrate, realization of electronic circuits in the conductive layer and depositing of electronic components on the conductive layer, connected to the electronic circuits. The plastics interlayer is then deposited on the conductive layer. The sandwich is obtained by the application of the second layer of glass on the plastics interlayer, which is then laminated as outlined before.

EP 1 840 449 describes such a panel of laminated glass with two bus bars, wherein each bus bar is adapted to provide electrical power to a plurality of electronic circuits. The bus bars are provided on the conductive layer and each bus bar comprises a plurality of spaced insulators arranged at intervals along its length so as to provide alternately electrical connections and non-electrical connections, respectively, between a conductive strip of the bus bar and the conductive layer at selected positions. Thus, it is possible to supply in an independent way several electronic circuits realized in the conductive layer.

In order to assure a good electric contact between the bus bar and the conductive layer, it is important that most of the surface of the bus bar is in contact with the conductive layer. Nevertheless, as generally, the surface of the bus bar is not perfectly plane, the electrical contact between the bus bar and the conductive layer is not good. A classical solution in order to increase the surface of the bus bar which is in contact with the conductive layer is to place silver spray or conductive glue between the bus bar and the conductive layer. The silver spray, which is preferably applied with a brush, is provided on the conductive layer prior to placing the bus bar on the conductive layer. Applying conductive glue follows a similar method.

However, applying silver spray or conductive glue prior to depositing the bus bar on the conductive layer is very time expensive. Further, the silver spray is very costly and noxious for an operator applying the silver spray on the conductive layer.

### Summary of the present invention

Accordingly, it is the object of the invention to provide a bus bar that is easy to produce in mass for a low cost and provides a high reliability of the electrical contact between the conductive strip and a conductive layer during usage. It is a further object of the present invention, in at least one of its embodiment, to provide a bus bar that can be applied on a coating in a way that is not noxious. An advantage of the present invention is to provide a method for manufacturing a panel of laminated glass that provides a high reliability of the electrical contact between the bus bar and the conductive layer during usage.

This object is addressed by a bus bar comprising a conductive strip wherein at least one side of the conductive strip is at least partially covered by an electrically conductive coating. In general, the electrically conductive coating can be provided as any electrically conductive material. However, according to the preferred embodiment of the invention, the electrically conductive coating is provided as a low melting point solder. The low melting point solder can be provided for example as a composition of lead and of indium, of tin, of tin and lead, or of any other solder known from the prior art. Preferably, the melting temperature of the low melting point solder is ≤ 140 °C.

Accordingly, it is an essential idea of the invention to provide the electrically conductive coating, and preferably provided as a low melting point solder, on at least one side of the conductive strip of the bus bar for improving the electrical contact between the conductive strip of the bus bar and another contact element, such as a conductive layer. As a matter of fact, in that case, melting of the low melting point solder (for instance by heating the bus bar) assure that most of the surface of the conductive strip of the bus bar is in contact with the conductive layer even in the case where the surface of the bus bar is not plane. As a consequence, the invention provides a bus bar that is easy to produce in mass, in a non noxious way, for a low cost and provides a high reliability of the electrical contact between the conductive strip and a conductive layer during usage.

The conductive strip can be realised in copper or in any other conductive material or combination of conductive materials. It can be solid or perforated, e. g. drawn, rolled, woven, extruded, knitted or graded.

It is further preferred that the bus bar comprises a first insulating layer provided on one side of the conductive strip and adapted for holding the conductive strip, and a second insulating layer provided on the other side of the conductive strip and adapted for holding the conductive strip and the first insulating layer, wherein the first insulating layer and/or the second insulating layer comprises an opening for providing electrical access to the conductive strip.

The opening can be cut or pierced by a laser beam, for example. Preferably, the opening is provided in the first insulating layer and/or in the second insulating layer prior to manufacturing the bus bar, which improves flexibility and reduces manufacturing cost. Such a bus bar according to the invention provides good long term reliability, given that the electrical contact between the conductive strip and another contact element is improved. Further, such a bus bar according to the invention is easy to manufacture.

It is further preferred that a plurality of spaced openings is provided, wherein the spaced openings are preferably arranged at intervals along the length of the conductive strip. The plurality of spaced conductive strips may be arranged in such a manner that the first insulating layer and a second insulating layer are shared, wherein electrical access is provided alternately for each conductive strip. Further, the first insulating layer and/or the second insulating layer can be provided as a plastic material and/or plastic film on which an adhesive is deposited for holding the conductive strip and for holding the second insulating layer and/or the first insulating layer, respectively. In addition, the bus bar may be laminated together for fixing the first insulating layer, the conductive strip and a second insulating layer.

According to the preferred embodiment of the invention, the electrically conductive coating is directed towards the opening. This means that the conductive strip is preferably covered by the electrically conductive coating on the side of the conductive strip, which is accessible by the opening.

According to the preferred embodiment of the invention, the width of the electrically conductive coating is thinner than the width of the conductive strip and/or the thickness of the electrically conductive coating is thinner than the thickness of the conductive strip. In other words, it is preferred that the electrically conductive coating does not overlie the conductive strip and/or is thinner than the conductive strip. It is especially preferred that the electrically conductive coating is provided with a width of 20 µm.

The bus bar with the conductive strip can be used in a panel of laminated glass, having a first glass substrate, a conductive layer, wherein the conductive layer is provided on the first glass substrate, and a second glass substrate, wherein the two glass substrates are laminated together via a plastics interlayer, wherein the plastics interlayer is provided on the conductive layer.

Accordingly, the object of the invention is further addressed by a panel of laminated glass, comprising a first glass substrate, a conductive layer, wherein the conductive layer is provided on the first glass substrate, a second glass substrate, wherein the two glass substrates are laminated together via a plastics interlayer, wherein the plastics interlayer is provided on the conductive layer, and a bus bar comprising a conductive strip, wherein at least one side of the conductive strip is at least partially covered by an electrically conductive coating, preferably provided as a low melting point solder. In this way, the electrical contact between the conductive layer and the bus bar is improved by adding the electrically conductive coating, and preferably provided as a low melting point solder, onto the conductive strip of the bus bar. This is advantageous over the prior art as the panel of laminated glass according to the invention provides a very reliable electrical contact between the conductive strip and the conductive layer. As a matter of fact, melting of the low melting point solder (for instance by heating the panel during its production or lamination process) assure that most of the surface of the conductive strip of the bus bar is in contact with the conductive layer even in the case where the surface of the conductive strip is not plane. As a consequence, the invention provides a panel that is easy to produce in mass, in a non noxious way, for a low cost and provides a high reliability of the electrical contact between the conductive strip and a conductive layer during usage.

Further, the panel of laminated glass according to the invention provides a good resistance against external vibrations.

In the preferred embodiment, the bus bar comprises a first insulating layer provided on one side of the conductive strip and adapted for holding the conductive strip, and a second insulating layer provided on the other side of the conductive strip and adapted for holding the conductive strip and the first insulating layer, the first insulating layer and/or the second insulating layer comprises an opening for providing electrical access to the conductive strip, wherein in the opening the electrically conductive coating is in electrical contact with the conductive layer.

According to another preferred embodiment of the invention, the panel of laminated glass further comprises an external connection for providing electrical contact to the bus bar, wherein the external connection is coupled to the bus bar via an external electrically conductive connection coating on the side of the bus bar that faces away from the conductive layer. The external connection allows the provision of a source of electrical signals, such as a power supply or a controller, to the bus bar. The external electrically conductive connection coating can be provided as a low melting point solder, i.e. preferably out of the same material or out of a similar material as the electrically conductive coating. In this manner, an electrically reliable external connection can be provided to the bus bar, which is preferably provided on the side of the bus bar that faces away from the conductive layer.

The object of the invention is further addressed by a method for manufacturing a bus bar, comprising the steps of providing a conductive strip, adhering the conductive strip onto a first insulating layer, adhering the conductive strip and a first insulating layer with a second insulating layer, providing an electrically conductive coating, preferably provided as a low melting point solder, on at least one side of the conductive strip, and providing electrical access to the electrical conductive coating by an opening in the first insulating and/or in the second insulating layer. In this way, a very reliable electrical connection is provided between the conductive strip and the electrically conductive coating provided on at least one side of the conductive strip.

The object of the invention is further addressed by a method for manufacturing a panel of laminated glass, comprising the steps of providing a conductive layer on a first glass substrate, applying a bus bar according to the invention, a bus manufactured according to the invention, or a bus bar, which is provided on at least one side with an electrically conductive coating, preferably provided as a low melting point solder, on the conductive layer, wherein the electrical conductive coating is in electrical contact with the conductive layer, and laminating the first glass substrate and a second glass substrate via a plastics interlayer, wherein the plastics interlayer is provided on the second glass substrate. Such an embodiment allows a form of the bus bar which is more compact and assures a final fixation of the bus bar. As a matter of fact, in that case, melting of the low melting point solder (for instance by heating the bus bar) assure that most of the surface of the conductive strip of the bus bar is in contact with the conductive layer even in the case where the surface of the bus bar is not plane. As a consequence, the invention provides a panel that is easy to produce in mass, in a non noxious way, for a low cost and provides a high reliability of the electrical contact between the conductive strip and a conductive layer during usage. The embodiment allows for a reliable contact between the conductive layer and the bus bar via the electrically conductive coating. Generally, the lamination allows for evacuation of any air present between the conductive strip of the bus bar and the conductive layer, obtaining a good electrical contact between the conductive strip of the bus bar and the conductive layer.

According to another preferred embodiment of the invention, the method further comprises the step of applying an external connection for providing electrical contact to the bus bar, wherein the external connection is coupled to the bus bar via an external electrically conductive connection coating, preferably provided as a low melting point solder, on the side of the bus bar that is facing away from the conductive layer. In other words, an external connection is provided in electrical contact to the bus bar via the external electrically conductive connection coating, which is preferably provided on the side of the bus bar that faces away from the conductive layer. Thanks to the external electrically conductive coating, a very reliable electrical connection between the external connection and the bus bar can be obtained. Such an external connection allows for a provision of external signals, such as a power supply or a controller, to the bus bar.

According to another preferred embodiment of the invention, the method further comprises the step of autoclaving the panel of laminated glass for melting the electrically conductive coating between the bus bar and the conductive layer and/or for melting the external electrically conductive connection coating between the external connection and the bus bar. In this way, the electrically conductive coating and/or the external electrically conductive connection coating, which are preferably provided as a low melting point solder, melt together the bus bar and the conductive layer and/or melt together the external connection and the bus bar, respectively, during the step of autoclaving of the panel of laminated glass. Preferably, during the step of autoclaving the panel of laminated glass is applied to temperatures in the order of 140 °C and to pressure. In this way, a good electrical contact is obtained between the bus bar and the conductive layer, and/or between the bus bar and the external connection, respectively.

These and other aspects of the invention will be apparent from and elucidated with reference to the embodiments described hereinafter.

### Brief Description of the Drawings

In the drawings:
- Fig. 1: depicts a top view of the bus bar according to a preferred embodiment of the invention,
- Fig. 2: depicts a longitudinal view of the bus bar according to the preferred embodiment of the invention,
- Fig. 3: depicts a longitudinal view of a panel of laminated glass according to another preferred embodiment of the invention prior to autoclaving,
- Fig. 4: depicts a longitudinal view of a panel of laminated glass according to the another preferred embodiment of the invention after autoclaving, and
- Fig. 5: is a longitudinal view of panel of laminated glass according to another preferred embodiment of the invention.

### Description of the illustrative embodiments

The drawings described are only schematic and are non-limiting. In the drawings, the size of some of the elements may be exaggerated and not drawn on scale for illustrative purposes. The mere fact that certain measures are recited in mutually different dependent claims does not indicate that a combination of these measured cannot be used to advantage. Any reference signs in the claims should not be construed as limiting the scope.

Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

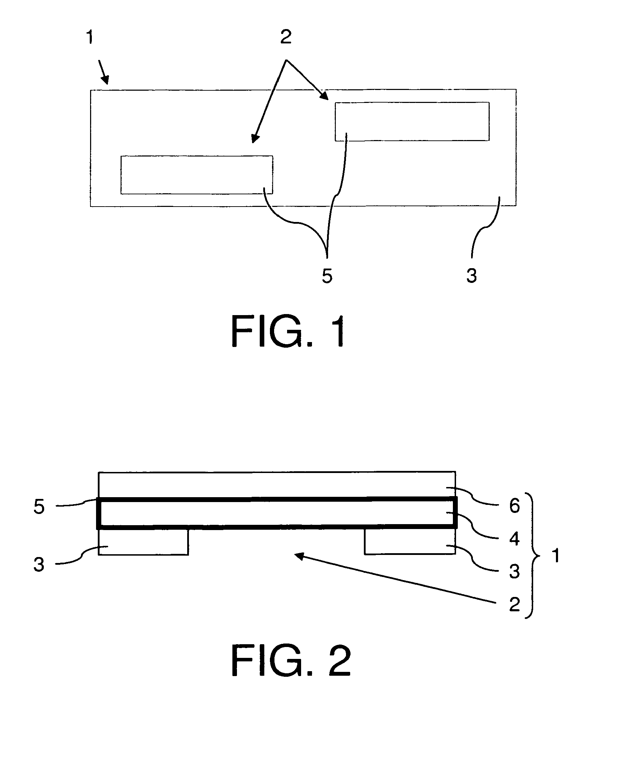

As can be seen from Fig. 1, according to a preferred embodiment of the invention, a top view of the bus bar 1 is depicted. The bus bar 1 comprises two openings 2, which are provided in the second insulating layer 3. Each opening 2 provides electrical access to the conductive strip 4, not depicted, wherein the conductive strip 4 is covered by an electrically conductive coating 5, which is directed towards the opening 2. The coating (or plating) can be carried out by manufacturing routes, e.g. dipping, electrocoating, electroless coating, sputtering, ...

As can be seen further, the opening 2 provides electrical access to the first conductive strip 4 via the electrically conductive coating 5, wherein the first opening 2 providing electrical access to the first conductive strip 4 via the electrically conductive coating 5 is offset relative to the second opening 2 providing electrical access to the second conductive strip 4 via the electrically conductive coating 5. The electrically conductive coating 5 is provided as a low melting point solder, such as a composition of lead and indium, tin, tin and lead, or other solder known from the prior art. The melting temperature of the low melting points solder is ≤ 140 °C.

Fig. 2 depicts a longitudinal view of the bus bar 1. The bus bar 1 comprises further a first insulating layer 6, the conductive strip 4 and the second insulating layer 3. The first insulating layer 6 can be realised as a plastic material on which a layer of adhesive is deposited. For example, the first insulating layer 6 can be a tape sold under the trade name 3M 390 marketed by the cooperation 3M.

In order to manufacture the bus bar 1, the conductive strip 4 is realised in copper, for example as a product marketed by the corporation Comet Metals Co. located in Walton Hills, OH. The conductive strip 4 is then covered by the electrically conductive coating 5, as depicted in Fig. 2. According to the preferred embodiment of the invention, all sides of the conductive strip 4 are covered by the electrically conductive coating 5. Alternatively, the electrically conductive coating 5 can be provided on the side of the conductive strip 4 that is directed towards the opening 2. Then, a second insulating layer 3 is deposited on the first insulating layer 6 and the conductive strip 4 is covered by the electrically conductive coating 5. Electrical access is provided to the conductive strip 4 via the electrically conductive coating 5 in the opening 2.

The second insulating layer 3 is for example a plastic film on which is deposited or applied layer of adhesive, for example a film marketed by the cooperation 3M under the commercial reference 3M 9471FL, in order to fix the second insulating layer 3 to the first insulating layer 6 and the conductive strip 4. The opening 2 is previously fixed into the second insulating layer 3 prior to fixing the second insulating layer 3 onto the first insulating layer 6 and onto the conductive strip 4. It is further equally conceivable that the second insulating layer 3 is also provided with a conductive adhesive on the side facing away from the conductive strip 4, to fix the bus bar 1.

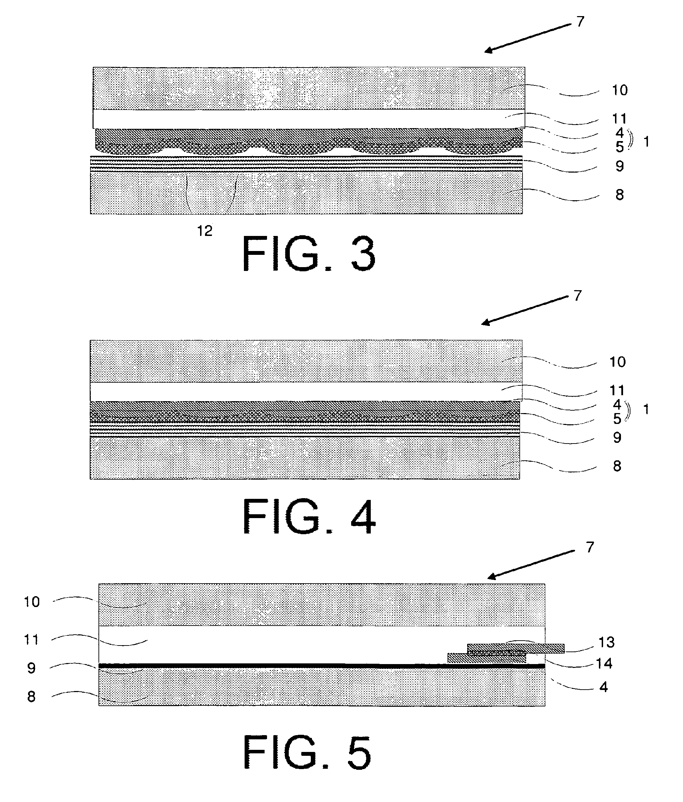

Figures 3 to 5 illustrates a simplified embodiment of the invention according to which the bus bar 1 comprises only the conductive strip 4 provided with the coating 5.

Fig. 3 depicts a panel of laminated glass 7 in a longitudinal view according to another preferred embodiment prior to autoclaving. The panel of laminated glass 7 comprises a first glass substrate 8 on which a conductive layer 9 is provided. A conductive strip 4 is provided on top of the conductive layer 9, wherein the electrically conductive coating 5 is provided in between the conductive strip 4 and the conductive layer 9.

The panel of laminated glass 7 further comprises a second glass substrate 10 and a plastics interlayer 11, wherein the plastics interlayer 11 is provided in between the conductive strip 4 and the second glass substrate 10. The plastics interlayer 11 may comprise Polyvinylbutyral, for example having the reference Solutia RB41. The first glass substrate 8 and/or a second glass substrate 10 can be provided as the material ITO having the reference ITO CEC005P manufactured by Präzisions Glas & Optik.

Fig. 4 depicts the panel of laminated glass 7 according to the preferred embodiment of the invention after autoclaving. Thanks to applying pressure and heat during the process step of autoclaving, the panel of laminated glass 7 received a compactor form, as the electrically conductive coating 5 has melted the conductive layer 9 and the bus bar 1 together. In contrary to Fig. 3, and as depicted in Fig. 4, the spaces 12 in between the conductive layer 9 and the electrically conductive coating 5 have been removed due to the process step of autoclaving. In this way, a very reliable electrical contact is created between the conductive layer 9 and the conductive strip 4 by melting the electrically conductive coating 5 in between the conductive layer 9 and the conductive strip 4.

Fig. 5 depicts longitudinal view of a panel of laminated glass according to another preferred embodiment of the invention. As it can be seen, an external connection 13 is provided on top of the conductive strip 4. In other words, the conductive strip 4 is provided in between the conductive layer 9 and the external connection 13, wherein the electrically conductive coating 5 (not illustrated on figure 5) is provided in between the conductive layer 9 and the conductive strip 4 and an external electrically conductive connection coating 14 is provided in between a conductive strip 4 and the external connection 13.

Similar or equal to the electrically conductive coating 5, the external electrically conductive connection coating 14 is provided as a low melting point solder as well. In this way, a reliable and good electrical contact (through soldering) is provided between the bus bar 1 and the external connection during the process step of autoclaving by melting the external electrically conductive connection 14 in between the bus bar 1 (comprising the conductive strip 4 and the coating 5) and the external connection 13. Thanks to the external connection 13, the conductive strip 4 of the bus bar 1 and/or the conductive layer 9 can be connected to external power sources or external controllers.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

## Claims

1. Bus bar comprising
a conductive strip (4),
a first insulating layer (6) provided on one side of the conductive strip (4) and adapted for holding the conductive strip (4), and
a second insulating layer (3) provided on the other side of the conductive strip (4) and adapted for holding the conductive strip (4) and the first insulating layer (3), wherein
the first insulating layer (6) and/or the second insulating layer (3) comprises an opening (2) for providing electrical access to the conductive strip (4), and wherein
at least one side of the conductive strip (4) is covered by an electrically conductive plating (5),
wherein the electrically conductive plating (5) is provided as a low melting point solder,
wherein the electrically conductive plating (5) is directed towards the opening (2),
wherein the width of the electrically conductive plating (5) is thinner than the width of the conductive strip (4) and/or the thickness of the electrically conductive plating (5) is thinner than the thickness of the conductive strip (4).

2. Panel of laminated glass (7), comprising
a first glass substrate (8),
a conductive layer (9), wherein the conductive layer (9) is provided on the first glass substrate (8),
a second glass substrate (10), wherein the two glass substrates (8, 10) are laminated together via a plastics interlayer (11), wherein the plastics interlayer (11) is provided on the conductive layer (9), and a bus bar (1) comprising
a conductive strip (4),
a first insulating layer (6) provided on one side of the conductive strip (4) and adapted for holding the conductive strip (4), and
a second insulating layer (3) provided on the other side of the conductive strip (4) and adapted for holding the conductive strip (4) and the first insulating layer (3), wherein
the first insulating layer (6) and/or the second insulating layer (3) comprises an opening (2) for providing electrical access to the conductive strip (4), and wherein
at least one side of the conductive strip (4) is covered by an electrically conductive plating (5) and
wherein in the opening (2) the electrically conductive plating (5) is in electrical contact with the conductive layer (9),
wherein the electrically conductive plating (5) is provided as a low melting point solder,
wherein the electrically conductive plating (5) is directed towards the opening (2),
wherein the width of the electrically conductive plating (5) is thinner than the width of the conductive strip (4) and/or the thickness of the electrically conductive plating (5) is thinner than the thickness of the conductive strip (4).

3. Panel of laminated glass (7) according to claim 2, further comprising an external connection (13) for providing electrical contact to the bus bar (1), wherein the external connection (13) is coupled to the bus bar (1) via an external electrically conductive connection plating (14) on the side of the bus bar (1) that faces away from the conductive layer (9).

4. Method for manufacturing a bus bar (1), comprising the steps of:
providing a conductive strip (4),
adhering the conductive strip (4) onto a first insulating layer (6),
adhering the conductive strip (4) and the first insulating layer (6) with a second insulating layer (3),
providing an electrically conductive plating (5) on at least one side of the conductive strip (4), and
providing electrical access to the electrically conductive plating (5) by an opening (2) in the first insulating layer (6) and/or in the second insulating layer (3).

5. Method for manufacturing a panel of laminated glass (7), comprising the steps of:
providing a conductive layer (9) on a first glass substrate (8),
applying a bus bar (1) according to claim 1 or a bus bar (1) manufactured according to claim 4 on the conductive layer (11), wherein
the electrically conductive plating (5) is in electrical contact with the conductive layer (11), and
laminating the first glass substrate (8) and a second glass substrate (10) via a plastics interlayer (11), wherein the plastics interlayer (11) is provided on the second glass substrate (10).

6. Method for manufacturing a panel of laminated glass (7) according to claim 5, further comprising the step of applying an external connection (13) for providing electrical contact to the bus bar (1), wherein the external connection (13) is coupled to the bus bar (1) via an external electrically conductive connection plating (14) on the side of the bus bar (1) that is facing away from the conductive layer (9).

7. Method for manufacturing a panel of laminated glass (7) according to claim 5 or 6, further comprising the step of autoclaving the panel of laminated glass (7) for melting the electrically conductive plating (5) between the bus bar (1) and the conductive layer (11) and/or for melting the external electrically conductive connection plating (14) between the external connection (13) and the bus bar (1).

## Patentansprüche

1. Sammelleiter, umfassend:
einen leitfähigen Streifen (4),
eine erste isolierende Schicht (6), angeordnet auf einer Seite des leitfähigen Streifens (4) und eingerichtet zum Halten des leitfähigen Streifens (4), und
eine zweite isolierende Schicht (3), angeordnet auf der anderen Seite des leitfähigen Streifens (4) und eingerichtet zum Halten des leitfähigen Streifens (4) und der ersten isolierenden Schicht (3),
wobei die erste isolierende Schicht (6) und/oder die zweite isolierende Schicht (3) eine Öffnung (2) zum Bereitstellen von elektrischem Zugang zu dem leitfähigen Streifen (4) umfaßt, und
wobei mindestens eine Seite des leitfähigen Streifens (4) durch eine elektrisch leitfähige Plattierung (5) bedeckt ist,
wobei die elektrisch leitfähige Plattierung (5) als ein Lötmittel mit niedrigem Schmelzpunkt vorgesehen ist,
wobei die elektrisch leitfähige Plattierung (5) zu der Öffnung (2) gerichtet ist,
wobei die Breite der elektrisch leitfähigen Plattierung (5) dünner als die Breite des leitfähigen Streifens (4) ist und/oder die Dicke der elektrisch leitfähigen Plattierung (5) dünner als die Dicke des elektrischen Streifens (4) ist.

2. Paneel von laminiertem Glas (7), umfassend
ein erstes Glassubstrat (8),
eine leitfähige Schicht (9), wobei die leitfähige Schicht (9) auf dem ersten Glassubstrat (8) angeordnet ist,
ein zweites Glassubstrat (10), wobei die zweiten Glassubstrate (8, 10) zusammen über eine Kunststoffzwischenschicht (11) laminiert sind, wobei die Kunststoffzwischenschicht (11) auf der leitfähigen Schicht (9) angeordnet ist, und einen Sammelleiter (1), umfassend
einen leitfähigen Streifen (4),
eine erste isolierende Schicht (6), angeordnet auf einer Seite des leitfähigen Streifens (4) und eingerichtet zum Halten des leitfähigen Streifens (4), und eine zweite isolierende Schicht (3), angeordnet auf der anderen Seite des leitfähigen Streifens (4) und eingerichtet zum Halten des leitfähigen Streifens (4) und der ersten isolierenden Schicht (3),
wobei die erste isolierende Schicht (6) und/oder die zweite isolierende Schicht (3) eine Öffnung (2) zum Bereitstellen von elektrischem Zugang zu dem leitfähigen Streifen (4) umfaßt, und
wobei mindestens eine Seite des leitfähigen Streifens (4) durch eine elektrisch leitfähige Plattierung (5) bedeckt ist,
wobei in der Öffnung (2) die elektrisch leitfähige Plattierung (5) in elektrischem Kontakt mit der leitfähigen Schicht (9) ist,
wobei die elektrisch leitfähige Plattierung (5) als ein Lötmittel mit niedrigem Schmelzpunkt vorgesehen ist,
wobei die elektrisch leitfähige Plattierung (5) zu der Öffnung (2) gerichtet ist, wobei die Breite der elektrisch leitfähigen Plattierung (5) dünner als die Breite des leitfähigen Streifens (4) ist und/oder die Dicke der elektrisch leitfähigen Plattierung (5) dünner als die Dicke des elektrischen Streifens (4) ist.

3. Paneel von laminiertem Glas (7) gemäß Anspruch 2, weiter umfassend eine externe Verbindung (13) zum Bereitstellen von elektrischem Kontakt an den Sammelleiter (1), wobei die externe Verbindung (13) an den Sammelleiter (1) über eine externe elektrisch leitfähige Verbindungsplattierung (14) auf der Seite des Sammelleiters (1), welche von der leitfähigen Schicht (9) wegweist, gekoppelt ist.

4. Verfahren zur Herstellung eines Sammelleiters (1), umfassend die Schritte:
das Bereitstellen eines leitfähigen Streifens (4),
das Haften des leitfähigen Streifens (4) auf eine erste isolierende Schicht (6),
das Haften des leitfähigen Streifens (4) und der ersten isolierenden Schicht (6) mit einer zweiten isolierenden Schicht (3),
das Bereitstellen einer elektrisch leitfähigen Plattierung (5) auf mindestens einer Seite des leitfähigen Streifens (4) und
das Bereitstellen von elektrischem Zugang zu der elektrisch leitfähigen Plattierung (5) durch eine Öffnung (2) in der ersten isolierenden Schicht (6) und/oder in der zweiten isolierenden Schicht (3).

5. Verfahren zur Herstellung eines Paneels von laminiertem Glas (7), umfassend die Schritte:
das Bereitstellen einer leitfähigen Schicht (9) auf einem ersten Glassubstrat (8),
das Aufbringen eines Sammelleiters (1) gemäß Anspruch 1 oder eines Sammelleiters (1), hergestellt gemäß Anspruch 4, auf der leitfähigen Schicht (11),
wobei die elektrisch leitfähige Plattierung (5) in elektrischem Kontakt mit der leitfähigen Schicht (11) ist, und
das Laminieren des ersten Glassubstrats (8) und eines zweiten Glassubstrats (10) über eine Kunststoffzwischenschicht (11), wobei die Kunststoffzwischenschicht (11) auf dem zweiten Glassubstrat (10) angeordnet wird.

6. Verfahren zur Herstellung eines Paneels von laminiertem Glas (7) gemäß Anspruch 5, weiter umfassend den Schritt des Aufbringens einer externen Verbindung (13) zum Bereitstellen von elektrischem Kontakt an den Sammelleiter (1), wobei die externe Verbindung (13) an den Sammelleiter (1) über eine externe elektrisch leitfähige Verbindungsplattierung (14) auf der Seite des Sammelleiters (1), welche von der leitfähigen Schicht (9) wegweist, gekoppelt wird.

7. Verfahren zur Herstellung des Paneels von laminiertem Glas (7), gemäß Anspruch 5 oder 6, weiter umfassend den Schritt des Autoklavierens des Paneels von laminiertem Glas (7) zum Schmelzen der elektrisch leitfähigen Plattierung (5) zwischen dem Sammelleiter (1) und der leitfähigen Schicht (11) und/oder zum Schmelzen der externen elektrisch leitfähigen Verbindungsplattierung (14) zwischen der externen Verbindung (13) und dem Sammelleiter (1).

## Revendications

1. Barre omnibus comprenant:
une bande conductrice (4),
une première couche isolante (6) disposée sur un côté de la bande conductrice (4) et conçue pour maintenir la bande conductrice (4), et
une deuxième couche isolante (3) disposée de l'autre côté de la bande conductrice (4) et conçue pour maintenir la bande conductrice (4) et la première couche isolante (6), dans laquelle
la première couche isolante (6) et/ou la deuxième couche isolante (3) comportent une ouverture (2) permettant l'accès électrique à la bande conductrice (4), et dans laquelle
au moins un côté de la bande conductrice (4) est recouvert d'un placage conducteur de l'électricité (5),
dans laquelle le placage conducteur de l'électricité (5) est réalisé à base de soudure à point de fusion bas,
dans laquelle le placage conducteur de l'électricité (5) est dirigé vers l'ouverture (2),
dans laquelle la largeur du placage conducteur de l'électricité (5) est inférieure à la largeur de la bande conductrice (4) et/ou l'épaisseur du placage conducteur de l'électricité (5) est inférieure à l'épaisseur de la bande conductrice (4).

2. Panneau de verre feuilleté (7) comprenant :
un premier substrat en verre (8),
une couche conductrice (9), dans laquelle la couche conductrice (9) se trouve sur le premier substrat en verre (8),
un deuxième substrat en verre (10), dans lequel les deux substrats en verre (8, 10) sont solidarisés par une couche intermédiaire en plastique (11), dans lequel la couche intermédiaire en plastique (11) est appliquée sur la couche conductrice (9), et une barre omnibus comprenant :
une bande conductrice (4),
une première couche isolante (6) disposée sur un côté de la bande conductrice (4) et conçue pour maintenir la bande conductrice (4), et
une deuxième couche isolante (3) disposée de l'autre côté de la bande conductrice (4) et conçue pour maintenir la bande conductrice (4) et la première couche isolante (6), dans laquelle
la première couche isolante (6) et/ou la deuxième couche isolante (3) comportent une ouverture (2) permettant l'accès électrique à la bande conductrice (4), et dans laquelle
au moins un côté de la bande conductrice (4) est recouvert d'un placage conducteur de l'électricité (5),
dans laquelle, dans l'ouverture (2), le placage conducteur de l'électricité (5) est en contact électrique avec la couche conductrice (9),
dans laquelle le placage conducteur de l'électricité (5) est réalisé à base de soudure à point de fusion bas,
dans laquelle le placage conducteur de l'électricité (5) est dirigé vers l'ouverture (2),
dans laquelle la largeur du placage conducteur de l'électricité (5) est inférieure à la largeur de la bande conductrice (4) et/ou l'épaisseur du placage conducteur de l'électricité (5) est inférieure à l'épaisseur de la bande conductrice (4).

3. Panneau de verre feuilleté (7) selon la revendication 2, comprenant également une connexion externe (13) assurant le contact électrique avec la barre omnibus (1), dans lequel la connexion externe (13) est reliée à la barre omnibus (1) par un placage de connexion externe conducteur de l'électricité (14) sur le côté de la barre omnibus (1) opposé à celui de la couche conductrice (9).

4. Méthode de fabrication d'une barre omnibus (1), comprenant les étapes consistant à :
placer une bande conductrice (4),
fixer la bande conductrice (4) sur une première couche isolante (6),
fixer la bande conductrice (4) et la première couche isolante (6) sur une deuxième couche isolante (3),
appliquer un placage conducteur de l'électricité (5) sur au moins un côté de la bande conductrice (4), et
assurer l'accès électrique au placage conducteur de l'électricité (5) par une ouverture (2) dans la première couche isolante (6) et/ou dans la deuxième couche isolante (3).

5. Méthode de fabrication d'un panneau de verre feuilleté (7), comprenant les étapes consistant à :
placer une couche conductrice (9) sur un premier substrat en verre (8),
placer une barre omnibus (1) selon la revendication 1 ou une barre omnibus (1) fabriquée selon la revendication 4 sur la couche conductrice (11), dans laquelle
le placage conducteur de l'électricité (5) est en contact électrique avec la couche conductrice (11), et
solidariser le premier substrat en verre (8) et un deuxième substrat en verre (10) à l'aide d'une couche intermédiaire en plastique (11), la couche intermédiaire en plastique (11) étant appliquée sur le deuxième substrat en verre (10).

6. Méthode de fabrication d'un panneau en verre feuilleté (7) selon la revendication 5, comprenant en outre les étapes consistant à placer une connexion externe (13) destinée à assurer le contact électrique avec la barre omnibus (1), dans laquelle la connexion externe (13) est reliée à la barre omnibus (1) au moyen d'un placage de connexion externe conducteur de l'électricité (14) du côté de la barre omnibus (1) opposé à celui de la couche conductrice (9).

7. Méthode de fabrication d'un panneau en verre feuilleté (7) selon la revendication 5, comprenant en outre les étapes consistant à autoclaver le panneau de verre feuilleté (7) pour faire fondre le placage conducteur de l'électricité (5) entre la barre omnibus (1) et la couche conductrice (11) et/ou pour faire fondre le placage de connexion externe conducteur de l'électricité (14) entre la connexion externe (13) et la barre omnibus (1).
